**Europäisches Patentamt**

**European Patent Office**

**Office européen des brevets**

(19)

(11) Veröffentlichungsnummer: **0 058 255 B1**

(12) # EUROPÄISCHE PATENTSCHRIFT

(45) Veröffentlichungstag der Patentschrift:
06.03.85

(51) Int. Cl.⁴: **B 23 K 9/20**

(21) Anmeldenummer: **81110790.3**

(22) Anmeldetag: **28.12.81**

(54) Bolzenschweisspistole.

(30) Priorität: **18.02.81 DE 3105987**

(43) Veröffentlichungstag der Anmeldung:
**25.08.82 Patentblatt 82/34**

(45) Bekanntmachung des Hinweises auf die Patenterteilung:
**06.03.85 Patentblatt 85/10**

(84) Benannte Vertragsstaaten:
**AT BE CH FR GB IT LI**

(56) Entgegenhaltungen:
**DE - A - 1 515 082**
**FR - A - 2 162 124**
**US - A - 3 940 587**

(73) Patentinhaber: **Heberle, Manfred, Ohmstrasse 3,
D-8060 Dachau (DE)**

(72) Erfinder: **Heberle, Manfred, Ohmstrasse 3,
D-8060 Dachau (DE)**

(74) Vertreter: **Weber, Otto Ernst, Dipl.-Phys.,
Hofbrunnstrasse 47, D-8000 München 71 (DE)**

## Beschreibung

Die Erfindung betrifft eine Bolzenschweißpistole, bei welcher ein Bolzen von der Seite her durch ein Einfüllrohr in einen Pistolenkolben einzuführen und mittels einer an einem Schubkolben angebrachten Schubstange in einen am vorderen Ende der Pistole angeordneten Bolzenhalter hineinzuschieben ist.

Eine solche Bolzenschweißpistole ist im Stand der Technik (z. B. DE-A-1 515 082) allgemein üblich. Da jedoch Bolzen mit unterschiedlichen Längen und Durchmessern verwendet werden müssen, besteht das Problem, die Bolzenschweißpistole auf einen anderen Bolzentyp umzurüsten. Dazu ist es bei den bekannten Bolzenschweißpistolen erforderlich, den gesamten Pistolenkolben von der Pistole abzumontieren und gegen einen Pistolenkolben mit einer anderen Innenbohrung auszutauschen, wobei gegebenenfalls außerdem die Länge der Schubstange der Bolzenlänge durch einen verhältnismäßig aufwendigen Umbau angepaßt werden muß. Entweder muß bei herkömmlichen Bolzenschweißpistolen die Schubstange ausgewechselt werden oder es muß über eine entsprechende Verstelleinrichtung ihre Länge verändert werden. Es ist daher bei bekannten Bolzenschweißpistolen die Umrüstung auf andere Bolzengrößen verhältnismäßig umständlich und aufwendig.

Der Erfindung liegt die Aufgabe zugrunde, eine Bolzenschweißpistole der eingangs näher genannten Art zu schaffen, welche für die Verarbeitung von Bolzen mit unterschiedlichen Längen und/oder Durchmessern besonders leicht umzurüsten ist.

Zur Lösung dieser Aufgabe sieht die Erfindung vor, daß in dem Pistolenkolben ein Einschubrohr leicht lösbar gehalten ist, daß das im Bereich der Mündung des Einfüllrohres mit einer seitlichen Öffnung versehene Einschubrohr einen vorgebbaren und dem jeweiligen Außendurchmesser des zu verarbeitenden Bolzens angepaßten Innendurchmesser aufweist, daß an dem von dem Bolzenhalter abgewandten Ende des Einschubrohres eine den Hub der Schubstange begrenzende Distanzbuchse austauschbar angeordnet ist und daß die Länge der Distanzbuchse der jeweiligen Länge des zu verarbeitenden Bolzens entspricht.

Vorzugsweise kann dabei vorgesehen sein, daß das Einschubrohr im Gleitsitz im Pistolenkolben angeordnet ist.

Eine besonders einfache Möglichkeit, das Einschubrohr aus dem Pistolenkolben auszubauen, ergibt sich dadurch, daß das Einschubrohr durch eine Überwurfmutter am Pistolenkolben fixiert ist. Um das Herausziehen des Einschubrohres aus dem Pistolenkolben zu erleichtern, kann gemäß einer vorteilhaften Weiterbildung der Erfindung vorgesehen sein, daß das Einschubrohr im Bereich seines vorderen, dem Bolzenhalter zugewandten Ende wenigstens eine Ausnehmung aufweist, mit welcher ein zum Herausziehen des Einschubrohres dienendes Werkzeug zum Eingriff zu bringen ist. Eine besonders einfache Konstruktion kann dadurch erreicht werden, daß mit einer Überwurfmutter zugleich mit dem Einschubrohr auch der Bolzenhalter am Pistolenkolben befestigt und fixiert wird.

Eine weitere bevorzugte Ausführungsform des Erfindungsgegenstandes sieht vor, daß die Distanzbuchse mit dem Einschubrohr verschraubt ist. Bei dieser Ausführungsform ist es möglich, zugleich mit dem Einschubrohr die Distanzbuchse aus dem Pistolenkolben herauszunehmen. Es kann dann von Fall zu Fall entschieden werden, ob es zweckmäßiger ist, zugleich mit einem anderen Einschubrohr eine bereits an diesem anderen Einschubrohr befestigte Distanzbuchse einzusetzen oder aber die Distanzbuchse am Einschubrohr auszuwechseln. Es hängt von der Art und der Häufigkeit der erforderlichen Umrüst-Vorgänge ab, welche der durch die Erfindung gebotenen vorteilhaften Möglichkeiten am besten geeignet ist.

Vorzugsweise ist weiterhin vorgesehen, daß die Distanzbuchse aus einem Kunststoffmaterial besteht.

Gemäß der Erfindung ist der wesentliche Vorteil erreichbar, daß rasch, bequem, leicht und ohne besonderes manuelles Geschick entweder nur das Einschubrohr oder nur die Distanzbuchse oder aber beide Bauteile zugleich gegen entsprechende Bauteile mit anderen Abmessungen ausgetauscht werden können. Weiterhin ergibt sich gemäß der Erfindun der wesentiche Vorteil, daß die Lagerhaltung für Austauschstücke wesentlich vereinfacht wird, weil grundsätzlich nur Einschubrohre und Distanzbuchsen zum Austausch vorrätig sein müssen. Es ist nicht mehr erforderlich, die wesentlich umfangreicheren und aufwendigeren Pistolenkolben mit verschiedenen Innendurchmessern zum Austausch zur Verfügung zu haben, wie dies bei herkömmlichen Bolzenschweißpistolen notwendig war.

Weiterhin ergibt sich gemäß der Erfindung der Vorteil, daß nur noch verhältnismäßig einfache und entsprechend preiswerte Bauteile ersetzt werden müssen, wenn durch erhebliche Benutzung wegen des damit verbundenen Verschleißes die der Abnutzung am stärksten unterworfenen Teile auszuwechseln sind.

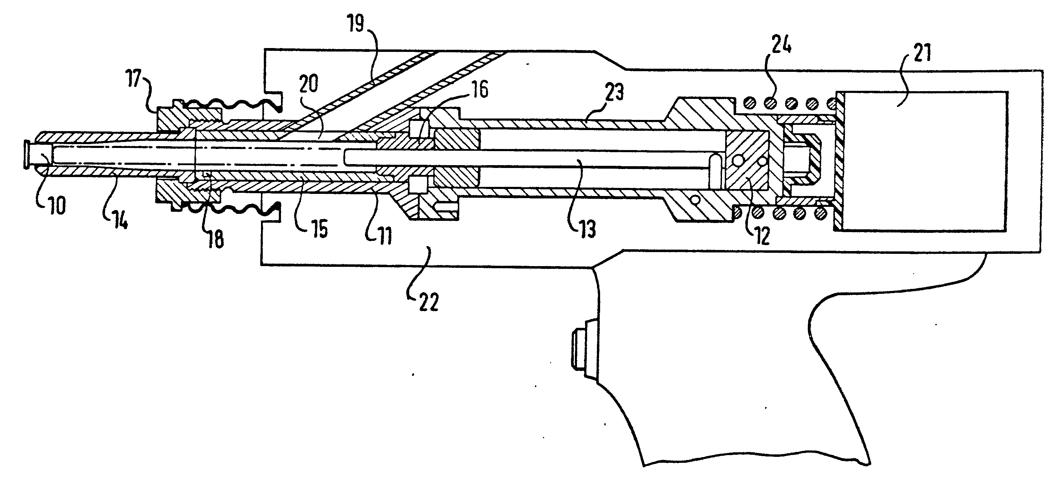

Die Erfindung wird nachfolgend beispielsweise anhand der Zeichnung beschrieben; in dieser zeigt die einzige Figur einen schematischen Längsschnitt durch eine Bolzenschweißpistole.

Bei der in der Zeichnung rein schematisch dargestellten Bolzenschweißpistole ist in einem Pistolengehäuse 22 eine Anordnung von Bauteilen in axialer Richtung verschieblich gelagert, die im wesentlichen aus dem Pistolenkolben 11, dem daran an der Vorderseite angebrachten Bolzenhalter 14 und dem ebenfalls mit dem Pistolenkolben 11 fest verbundenen Schubzylinder 23 gebildet ist.

Diese Anordnung kann innerhalb des Pistolengehäuses 22 durch den Magneten 21 gegen die Kraft einer Feder 24 in axialer Richtung über eine vorgegebene Strecke bewegt werden.

Es sei an dieser Stelle darauf hingewiesen, daß in der vorliegenden Beschreibung darauf verzichtet werden kann, den an sich bekannten Aufbau und die ebenfalls bekannte Arbeitsweise einer Bolzenschweißpistole herkömmlicher Art näher zu erläutern. Folglich werden in der nachfolgenden Beschreibung nur diejenigen Merkmale näher dargelegt, welche zum Verständnis der Erfindung erforderlich sind.

Der Schubkolben 12 mit der daran befestigten Schubstange 13 ist in der Zeichnung in zwei verschiedenen Stellungen veranschaulicht, nämlich in einer durch einen durchgezogenen Linienzug dargestellten zurückgezogenen Stellung und in einer mit einer strichpunktierten Linie gezeichneten vorgeschobenen Stellung, in welcher das vordere Ende der Schubstange 13 an dem Bolzen 10 anliegt und diesen auf ein Werkstück aufdrückt.

Wenn sich der Schubkolben 12 mit der daran befestigten Schubstange 13 in der zurückgezogenen Stellung befindet, kann durch ein seitlich in dem Pistolengehäuse 22 angeordnetes Einfüllrohr 19 ein Bolzen in den Bereich vor das vordere Ende der Schubstange 13 eingefüllt werden. Wenn die Schubstange 13 in die vorgeschobene Stellung bewegt wird, gelangt durch einen dem Außendurchmesser des Bolzens 10 angepaßten rohrförmigen Raum der Bolzen durch den geschlitzten und gegen eine Federkraft aufweitbaren Bolzenhalter 14 in die in der Zeichnung dargestellte Position. Bei diesem Vorgang, bei welchem der Bolzen aus dem Bereich der Mündung des seitlichen Einfüllrohres 19 in den in der Zeichnung dargestellten Bereich geschoben wird, kommt es entscheidend darauf an, daß einerseits der Innendurchmesser des rohrförmigen Raumes, in welchem der Bolzen nach vorne geschoben wird, dem Außendurchmesser des Bolzens angepaßt ist, und daß andererseits die Länge der Schubstange 13 ebenfalls der Längenabmessung des Bolzens entspricht. Der Innendurchmesser des für den Bolzen vorgesehenen Durchganges ist deshalb von Bedeutung, weil nur bei einem hinreichend genau dimensionierten Innendurchmesser gewährleistet ist, daß der Bolzen bei dem Verschiebevorgang ordnungsgemäß geführt und in einer exakt reproduzierbaren Stellung im Bereich der Mündung des Bolzenhalters 14 zum Anschweißen positioniert wird.

Die zum Anschweißen erforderliche Position des Bolzens 10 kann auch nur dann erreicht werden, wenn die Schubstange 13 in ihrer Länge in Abhängigkeit von der jeweiligen Länge des verwendeten Bolzens exakt dimensioniert ist.

Wenn ein Bolzen mit anderem Durchmesser verwendet werden soll, genügt es, eine Überwurfmutter 17 und damit den Bolzenhalter 14 von dem Pistolenkolben 11 abzunehmen, um anschließend mit Hilfe einer Ausnehmung 18 ein Einschubrohr 15 aus dem Pistolenkolben 11 herausziehen zu können. Es kann dann ein anderes Einschubrohr in den Pistolenkolben 11 eingesetzt werden, welches einen Innendurchmesser aufweist, der dem Außendurchmesser des zur Verarbeitung bestimmten Bolzens angepaßt ist.

Wenn die Länge der verarbeiteten Bolzen wechselt, braucht lediglich eine mit dem Einschubrohr verschraubte Distanzbuchse 16 ausgewechselt zu werden, nachdem das Einschubrohr aus dem Pistolenkolben 11 herausgenommen wurde.

Es ist grundsätzlich in das Belieben des Benutzers gestellt, ob er jeweils aus einem Einschubrohr 15 und einer Distanzbuchse 16 zusammengestellte Kombinationen dieser beiden Bauteile auswechseln will, um die Bolzenschweißpistole auf einen anderen Typ von Bolzen umzurüsten oder aber Einschubrohre und Distanzhülsen jeweils von Fall zu Fall einer geeigneten Bauteile-Kombination zusammenfügen möchte. Die Entscheidung über die zweckmäßigste Vorgehensweise läßt sich unter Berücksichtigung der Umstände des Einzelfalles leicht treffen.

Beim Zusammenbau der Bolzenschweißpistole ist darauf zu achten, daß eine seitliche Öffnung 20 in dem Einschubrohr 15 mit der Mündung des Einfüllrohres 19 fluchtet. Es kann vorzugsweise auch eine Vorkehrung dafür getroffen sein, daß sich das Einschubrohr 15 nur in einer solchen Winkelstellung in den Pistolenkolben einsetzen läßt, daß die seitliche Öffnung 20 mit der Mündung des Einfüllrohres 19 hinreichend exakt fluchtet.

## Patentansprüche

1. Bolzenschweißpistole, bei welcher ein Bolzen (10) von der Seite her durch ein Einfüllrohr (19) in einen Pistolenkolben (11) einzuführen und mittels einer an einem Schubkolben (12) angebrachten Schubstange (13) in einen am vorderen Ende der Pistole angeordneten Bolzenhalter (14) hineinzuschieben ist, dadurch gekennzeichnet, daß in dem Pistolenkolben (11) ein Einschubrohr (15) leicht lösbar gehalten ist, daß das im Bereich der Mündung des Einfüllrohres (19) mit einer seitlichen Öffnung (20) versehene Einschubrohr (15) einen vorgebbaren und dem jeweiligen Außendurchmesser des zu verarbeitenden Bolzens (10) angepaßten Innendurchmesser aufweist, daß an dem von dem Bolzenhalter (14) abgewandten Ende des Einschubrohres (15) eine den Hub der Schubstange (13) begrenzende Distanzbuchse (16) austauschbar angeordnet ist und daß die Länge der Distanzbuchse (16) der jeweiligen Länge des zu verarbeitenden Bolzens (10) entspricht.

2. Bolzenschweißpistole nach Anspruch 1, dadurch gekennzeichnet, daß das Einschubrohr (15) im Gleitsitz im Pistolenkolben (11) angeordnet ist.

3. Bolzenschweißpistole nach einem der Ansprüche 1 oder 2, dadurch gekennzeichnet, daß das Einschubrohr (15) durch eine Überwurfmutter (17) am Pistolenkolben (11) fixiert ist.

4. Bolzenschweißpistole nach einem der vorhergehenden Ansprüche, dadurch gekennzeichnet, daß das Einschubrohr (15) im Bereich seines vorderen, dem Bolzenhalter (14) zugewandten Endes wenigstens eine Ausnehmung (18) aufweist, mit welcher ein zum Herausziehen des Einschubrohres (15) dienendes Werkzeug zum Eingriff zu bringen ist.

5. Bolzenschweißpistole nach einem der vorhergehenden Ansprüche, dadurch gekennzeichnet, daß die Distanzbuchse (16) mit dem Einschubrohr (15) verschraubt ist.

6. Bolzenschweißpistole nach einem der vorhergehenden Ansprüche, dadurch gekennzeichnet, daß die Distanzbuchse (16) aus einem elektrisch nicht leitendem Material besteht.

7. Bolzenschweißpistole nach Anspruch 6, dadurch gekennzeichnet, daß die Distanzbuchse (16) aus einem Kunststoffmaterial besteht.

## Claims

1. Stud welding gun, in which a stud (10) is introduced from the side through a filling tube (19) into a gun stock (11) and is slid into a stud holder (14) located at the front end of the gun by means of a thrust rod (13) fitted to a thrust piston (12), characterized in that a slide-in tube (15) is held in an easily detachable manner in the gun stock (11), that the slide-in tube (15) is provided with a lateral opening (20) in the vicinity of the inlet of the filling tube (19) has a predeterminable internal diameter adapted to the particular external diameter of the stud (10) to be used, that at the end of the slide-in tube (15) remote from the stud holder (14) is interchangeably arranged a spacer bushing (16) limiting the stroke of the thrust rod (13) and that the length of the spacer bushing (16) corresponds to the particular length of the stud (10) to be used.

2. Stud welding gun according to claim 1, characterized in that the slide-in tube (15) is arranged with a sliding fit in the gun stock (11).

3. Stud welding gun according to one of the claims 1 or 2, characterized in that the slide-in tube (15) is fixed to the gun stock (11) by means of a cap nut (17).

4. Stud welding gun according to one of the preceding claims, characterized in that the slide-in tube (15) has at least one recess (18) in the vicinity of its front end facing the stud holder (14) and with said recess is engaged a tool used for removing the slide-in tube (15).

5. Stud welding gun according to one of the preceding claims, characterized in that the spacer bushing (16) is screwed to the slide-in tube (15).

6. Stud welding gun according to one of the preceding claims, characterized in that the spacer bushing (16) is made from an electrically nonconductive material.

7. Stud welding gun according to claim 6, characterized in that the spacer bushing (16) is made from a plastics material.

## Revendications

1. Pistolet à cartouche de soudage, dans lequel une cartouche formant un axe de soudage (10) est introduite par le côté à travers un tube de remplissage (19) dans un piston de pistolet (11) et est glissée vers l'intérieur, au moyen d'une tige de poussée (13), montée sur un piston de poussée (17), dans un support d'axe de soudage (14) disposé à l'extrémité antérieure du pistolet, pistolet caractérisé par un tube de poussée d'insertion (15), maintenu de manière amovible dans le piston de pistolet (11), pourvu d'une ouverture latérale (20) dans la zone de l'embouchure du tube de remplissage (19), et présentant un diamètre intérieur adapté, dans chaque cas, au diamètre extérieur de l'axe (10) de soudage, une douille d'espacement interchangeable (16) étant prévue sur l'extrémité du tube d'insertion (15) qui est éloignée du support (14), pour limiter la course de la tige de poussée (13), la longueur de cette douille d'espacement (16) correspondant à la longueur éventuelle de l'axe de soudage (10) à traiter.

2. Pistolet de soudage suivant la revendication 1, caractérisé en ce que le tube de poussée d'insertion (15) est disposé dans un siège de glissement à l'intérieur du piston (11) du pistolet.

3. Pistolet de soudage suivant l'une des revendications 1 ou 2, caractérisé en ce que le tube de poussée d'insertion (15) est fixé sur le piston de pistolet (11) au moyen d'un écrou à capuchon (17).

4. Pistolet de soudage suivant l'une quelconque des revendications 1 à 3, caractérisé en ce que le tube de poussée d'insertion (15) présente, dans sa zone d'extrémité antérieure tournée vers le support d'axe (14), au moins un évidement avec lequel peut être introduit et mis en prise un outil servant à l'extraction du tube de poussée d'insertion (15).

5. Pistolet de soudage suivant l'une quelconque des revendications 1 à 4, caractérisé en ce que la douille d'espacement (16) est assemblée par vissage au tube de poussée d'insertion (15).

6. Pistolet de soudage suivant l'une quelconque des revendications 1 à 5, caractérisé en ce que la douille d'espacement (16) est constituée en un matériau électriquement non conducteur.

7. Pistolet suivant la revendication 6, caractérisé en ce que la douille d'espacement (16) est constituée en matière synthétique.